# EUROPÄISCHE PATENTSCHRIFT

(11) **EP 3 165 700 B1**
(45) Veröffentlichungstag und Bekanntmachung des Hinweises auf die Patenterteilung: **27.06.2018**
(21) Anmeldenummer: 16193381.7
(22) Anmeldetag: 11.10.2016
(51) Int. Cl.: B32B 17/06, E06B 3/677

(54) **BRANDSCHUTZGLASFÜLLVORRICHTUNG, DARIN VERWENDBARE ENTLÜFTUNGSEINRICHTUNG UND VERFAHREN ZUM BEFÜLLEN VON BRANDSCHUTZGLÄSERN**
FIRE SAFETY GLASS FILLING DEVICE, VENTILATION DEVICE WHICH CAN BE USED WITHIN SAME AND METHOD FOR FILLING FIRE SAFETY GLASSES
DISPOSITIF DE REMPLISSAGE DE VITRES ANTI-INCENDIE, DISPOSITIF DE VENTILATION UTILISABLE DANS CE DERNIER ET PROCÉDÉ DE REMPLISSAGE DE VITRES ANTI-INCENDIE

(30) Priorität: 05.11.2015 DE 102015119042
(43) Veröffentlichungstag der Anmeldung: 10.05.2017
(73) Patentinhaber: HÖRMANN Eckelhausen, 66625 Eckelhausen (DE)
(72) Erfinder: BAUS, Thomas, 66620 Schwarzenbach (DE)
(74) Vertreter: Kastel, Stefan

(56) Entgegenhaltungen:
- DE-A1- 3 445 266

## Beschreibung

Die Erfindung betrifft eine Brandschutzglasfüllvorrichtung zum Befüllen von Brandschutzgläsern mit einer fließfähigen Brandschutzmaterialmasse. Weiter betrifft die Erfindung eine Entlüftungseinrichtung zur Verwendung in einer solchen Brandschutzglasfüllvorrichtung. Schließlich betrifft die Erfindung ein Verfahren zum Befüllen von Brandschutzgläsern mit einer Brandschutzmaterialmasse.
Die Erfindung liegt auf dem Gebiet der Herstellung von Brandschutzgläsern. Bei einer besonders bevorzugten Ausgestaltung der Erfindung werden die Brandschutzglasfüllvorrichtung, die darin verwendbare Entlüftungseinrichtung und das Verfahren zum Befüllen in einer Vorrichtung und/oder einem Verfahren zur Herstellung von Brandschutzgläsern verwendet.
Zum Stand der Technik zu entsprechenden Brandschutzgläsern und deren Herstellungsverfahren wird auf folgende Dokumente hingewiesen: DE29917402U1, DE102008009484A1, WO2006133896A1, WO002012085123A1, DE3125597A1, WO2009007452A1, DE3637064C1, DE4435841A1, EP1147981B1, EP1820931A1, DE3530968A1, DE3125597C2, DE102009044796A1, DE202006002749U1, DE4430710C1, DE69835258T2, WO2009007452A1, DE69619737T2, DE20303253U1, DE19731416C1, DE69632314T2.pdf, WO2010091525A1, DE10055151A1, EP0638526B1, DE10147401A1, EP1241144A1, DE19729336A1, WO1994016187A1, DE202004001010U1, DE202010008731U1, EP1893545A1, DE19824965A1, DE202008007339U1, EP0970930B1, DE202012012285U1, DE10237395B4, EP0951388B1, EP1930151B1, DE102005018842A1, DE4407892A1, DE19916506C1, DE60004041T2, EP1179113B1, DE202010008731U1, DE000060026690T2, EP1706263B1, DE3915687A1, DE19827867C1, DE202005001617U1, DE19922507C2, DE102009000377A1, DE19543148C2, EP0721047A1, DE102012200799A1 und EP0753639B1. Weiter wird zu Vorrichtungen zur Herstellung von Scheiben auf die DE 94 07 479 U1 verwiesen.

Ein Verfahren und eine Vorrichtung zum Befüllen eines Hohlraumes zwischen zwei Glasscheiben eines Brandschutzglasverbundes ist in der EP 1 432 570 B1 offenbart.

Wie aus dem vorerwähnten Stand der Technik bekannt, sind Brandschutzgläser in der Regel aus wenigstens einer ersten Scheibe, einer zweiten Scheibe und einem Brandschutzmaterial aufgebaut. Meist ist eine Versiegelung oder ein Rahmen zum Verbinden der Scheiben und zum Abdichten des das Brandschutzmaterial enthaltenden Raumes vorgesehen. Zum Beispiel ist ein Zwischenraum zwischen einer ersten und einer zweiten Scheibe mit einem Brandschutzmaterial gefüllt, wie es in der DE 35 30 968 A1 offenbart ist.

Brandschutzgläser weisen meist jeweils eine erste Scheibe, eine daran mit Abstand befestigte zweite Scheibe, Abstandshalter, eine umlaufende Abdichtung zum Abdichten des Zwischenraums zwischen den Scheiben und und ein Brandschutzmaterial auf, das den Zwischenraum vollständig ausfüllt.

Mit Hilfe der erfindungsgemäßen Vorrichtungen und Einrichtungen sowie Verfahren herzustellende Brandschutzgläser sind z.B. vom Grundaufbau her so aufgebaut, wie dies in der DE 35 30 968 A1 beschrieben und gezeigt ist. Auch als Brandschutzmaterial kann ein Brandschutzmaterial der aus der DE 35 30 968 A1 bekannten Art eingesetzt sein. Auch vergleichbare Brandschutzmaterialien sind möglich. Zur Herstellung wird, wie dies in der DE 35 30 968 A1 beschrieben ist, zunächst ein Rohling vorgefertigt, in dem die erste Scheibe und die zweite Scheibe mittels der Abstandshalter verbunden werden. Der so gebildete Zwischenraum wird mittels der Abdichtung bis auf eine später noch erläuterte Befüllöffnung und eine Entlüftungsöffnung an zwei diametral gegenüberliegenden Eckbereichen frei gelassen.

Die Herstellung der Befüll- und Entlüftungsöffnung kann ebenso geschehen, wie in der DE 35 30 968 A1 erläutert. Durch eine Befüllöffnung wird anschließend ein Ausgangsmaterialmasse eingefüllt, welche dazu ausgebildet ist, durch Polymerisation und Gelbildung nach Einfüllen in den Zwischenraum eine Brandschutzfüllung zu bilden. Auch dies ist in der DE 35 30 968 A1 im Einzelnen beschrieben.

DE 3445266 A1 offenbart eine Brandschutzglasfüllvorrichtung gemäß des einleitenden Teils des Anspruchs 1.

Der Erfindung liegt die Aufgabe zugrunde, eine Befüllvorrichtung zum Befüllen von Brandschutzgläsern, eine darin verwendbare Entlüftungseinrichtung sowie ein Befüllverfahren zum Befüllen von Brandschutzgläsern derart zu verbessern, dass der Befüllvorgang leichter handhabbar und einfacher durchführbar ist.
Hierzu schlägt die Erfindung eine Brandschutzglasfüllvorrichtung nach Anspruch 1 sowie eine darin verwendbare Entlüftungseinrichtung und ein damit durchführbares Brandschutzglasfüllverfahren nach den nebengeordneten Ansprüchen vor.
Vorteilhafte Ausgestaltungen sind Gegenstand der Unteransprüche.
Die Erfindung schafft gemäß einem ersten Aspekt eine Brandschutzglasfüllvorrichtung zum Befüllen von Brandschutzgläsern mit einem fließfähigen Brandschutzmaterialmasse, umfassend: einen an eine untere Befüllöffnung des Brandschutzglases anschließbare Füllanschluss zum Einfüllen der Brandschutzmaterialmasse an der unteren Befüllöffnung eines Brandschutzglases und wenigstens eine Entlüftungseinrichtung zum Anschließen an einer oberen Entlüftungsöffnung des Brandschutzglases, dadurch gekennzeichnet,
dass die Entlüftungseinrichtung einen Entlüftungskanal und ein im Bereich des Entlüftungskanals angeordnetes Quellmittel aufweist, das bei Kontakt mit der Brandschutzmaterialmasse aufquillt, um den Entlüftungskanal zu verschließen.
Es ist bevorzugt, dass die durch den Füllanschluss zu liefernde Brandschutzmaterialmasse ein Ausgangsmaterial zum Ausbilden eines gelartigen oder gelförmigen oder auspolymerisierten Brandschutzglasfüllung ist.

Insbesondere ist die Brandschutzmaterialmasse zum Ausbilden eines Brandschutz-Hydrogels ausgebildet. Beispielsweise ist die Brandschutzmaterialmasse eine Branschutzmaterialzusammensetzung, die zur Polymerisation zum Ausbilden einer gelartigen Brandschutzfüllung fähig ist. Vorzugsweise ist die Brandschutzmaterialmasse beim Befüllen noch fließfähig bzw. flüssig und härtet dann nach der Füllung innerhalb dem Brandschutzglas aus.

Gemäß einem weiteren Aspekt betrifft die Erfindung eine Entlüftungseinrichtung zur Verwendung in einer Brandschutzglasfüllvorrichtung, umfassend:
einen Schlauch und/oder eine Röhre aus einem Polymermaterial (insbesondere aus Kunststoff oder Silikon) zum Anschließen an eine Entlüftungsöffnung eines mit flüssiger Brandschutzmaterialmasse zu befüllenden Brandschutzglases und ein Quellmittel, das bei Kontakt mit flüssiger Brandschutzmaterialmasse aufquillt, um einen Entlüftungskanal des Schlauchs und/oder der Röhre zu verschließen.

Es ist bevorzugt, dass ein Satz von Entlüftungseinrichtungen als Wegwerfartikel vorgesehen ist.

Es ist bevorzugt, dass die Entlüftungseinrichtung einen Schlauch aus einem synthetischen Polymer aufweist, in dessen Inneren das Quellmittel angebracht ist. Bevorzugt ist eine Kunststoffhülse oder ein Kunststoffröhrchen vorgesehen, das wenigstens einen Teil des Entlüftungskanal bildet. Vorzugsweise ist das Kunststoffröhrchen oder die Hülse im Inneren des Schlauchs vorgesehen. Z.B. ist der Schlauch auf das Kunststoffröhrchen aufgesteckt.

Es ist bevorzugt, dass die Entlüftungseinrichtung ein Indikatormittel aufweist, das bei Kontakt mit dem Brandschutzmaterial sein Aussehen oder das Aussehen des Brandschutzmaterials ändert und dasss die Entlüftungseinrichtung zumindest derart teilweise durchsichtig oder opak ausgebildet ist, dass die Veränderung des Aussehens von außen sichtbar ist.

Es ist bevorzugt, dass das Indikatormittel dem Quellmittel zugefügt ist.

Es ist bevorzugt, dass das Quellmittel ein superabsorbierendes Polymer enthält.

Es ist bevorzugt, dass die Entlüftungseinrichtung ein Kunststoffröhrchen mit innenliegender Membran aufweist, die zumindest teilweise für die Brandschutzmaterialmasse durchlässig ist, wobei im Inneren der Membran das Quellmittel angeordnet ist.

Es ist bevorzugt, dass als Röhre ein Kunststoffröhrchen mit innenliegender, zumindest teilweise für die Brandschutzmaterialmasse durchlässiger Membran vorgesehen ist, in deren Inneren das Quellmittel vorgesehen ist.

Es ist bevorzugt, dass ein Indikatormittel vorgesehen ist, das bei Kontakt mit dem Brandschutzmaterial sein Aussehen oder das Aussehen des Brandschutzmaterials ändert und dasss der Schlauch und/oder die Röhre zumindest derart teilweise durchsichtig oder opak ausgebildet ist, dass die Veränderung des Aussehens von außen sichtbar ist.

Gemäß einem weiteren Aspekt schafft die Erfindung ein Verfahren zum Befüllen von Brandschutzgläsern mit flüssiger Brandschutzmaterialmasse umfassend:
a) Vorsehen einer Entlüftungseinrichtung für ein zu befüllendes Brandschutzglas, wobei die Entlüftungseinrichtung einen Entlüftungskanal und ein Quellmittel aufweist, wobei das Quellmittel derart ausgebildet und angeordnet ist, dass es bei Kontakt mit der Brandschutzmaterialmasse aufquillt, um den Entlüftungskanal zu verschließen;
b) Anschließen der Entlüftungseinrichtung an eine obere Entlüftungsöffnung des Brandschutzglases und Anschließen eines Füllanschlusses an eine untere Füllöffnung der Brandschutzglases;
c) Einfüllen des Brandschutzmaterials durch den Füllanschluss unter Entlüftung durch die Entlüftungseinrichtung, bis die Brandschutzmaterialmasse das Quellmittel in der Entlüftungseinrichtung erreicht;und
d) automatisches Verschließen der Entlüftungseinrichtung durch das Aufquellen des Quellmittels.

Vorzugsweise wird je wenigstens eine Entlüftungseinrichtung pro zu befüllendes Brandschutzglas vorgesehen.

Vorzugsweise umfasst das Verfahren den nach Schritt d) durchzuführenden Schritt:
e) Polymerisation der Brandschutzmaterialmasse, um eine Brandschutzmaterial-Füllung innerhalb des Brandschutzglases zu bilden.

Vorzugsweise umfasst Schritt e):
Ausbilden des Hydrogels bei angeschlossener und mittels des Quellmittels verschlossener Entlüftungseinrichtung.

Bevorzugt umfasst das Verfahren den nach Schritt e) durchzuführenden Schritt:
f) Entfernen der Entlüftungseinrichtung von der Entlüftungsöffnung.

Bevorzugt umfasst das Verfahren den nach Schitt e) oder f) durchzuführenden Schritt:
g) Entsorgen der Entlüftungseinrichtung.

Gemäß einer besonders bevorzugten Ausgestaltung der Erfindung wird ein Automatikventil zur Verwendung beim Füllen von Brandschutzscheiben vorgeschlagen. Das Automatikventil kann insbesondere als Entlüftungseinrichtung verwendet werden.
Beim Befüllen eines Brandschutzglases steigt der Füllpegel der Brandschutzflüssigkeit bei einer Füllung von mehr als 100% über die oberste Scheibenecke durch einen Eckwinkel in einen Silikonschlauch.

Das Brandschutzglas wird weiterhin mit Brandschutzflüssigkeit gefüllt und anlog steigt der Füllpegel in dem Silikonschlauch.

Beim dem weiteren Pegelanstieg durchströmt die Flüssigkeit ein Automatikventil. Dieses weist ein Kunststoffröhrchen mit innenliegender durchlässiger Membrane auf.

Die Membrane enthält ein Quellmittel wie vorzugsweise ein superabsorbierendes Polymer wie zum Beispiel Typ QPC 1S oder Typ QPCR 1E (z.B. erhältlich von Fraunhofer UMSICHT) in Granulat oder Pulverform.

Bevorzugt ist dem Quellmittel, insbesondere dem Polymer, zusätzlich ein Indikatorpulver (Zukaufkomponente, erhältlich im Markt) untergemischt.

Das Durchströmen der Brandschutzflüssigkeit durch die Membrane (durch das Polymer) bewirkt ein Quellen des Polymers innerhalb der Brandschutzflüssigkeit in wenigen Sekunden.

Die oberhalb des Automatikventils befindliche Brandschutzflüssigkeit wandelt sich in ein Gel um und verschließt somit die Auslassöffnung automatisch bei Erreichen des gewünschten Füllgrades.

Parallel reagiert das Indikatorpulver mit der Brandschutzflüssigkeit, aufgrund des pH-Werts der Brandschutzflüssigkeit und färbt die oberhalb des Automatikventils befindliche Brandschutzflüssigkeit z.B. rot (oder signalfarben) ein.

Vorteilhafte Ausgestaltungen der Erfindung haben insbesondere folgende Vorteile:
Durch ein automatisches Verschließen des Brandschutzglases bei Erreichen des maximalen Füllpegels fällt ein Arbeitsschritt des Prozesses weg. Das bei dem bisherigen Verfahren nach der Anmeldung DE10 2014 114 241 angedachte Hochsteigen eines Mitarbeiters zur oberen Entlüftungsöffnung zwecks Verschließen des Brandschutzglases mittels bisheriger als Klemmen oder dergleichen ausgeführter Verschlüsse entfällt.

Durch eine Färbung der oberhalb des automatischen Ventils befindliche Brandschutzflüssigkeit wird dem Mitarbeiter signalisiert, dass der Füllvorgang beendet ist und das Brandschutzglas vollständig gefüllt ist.

Ein Ausführungsbeispiel wird im Folgenden anhand der beigefügten Zeichnungen näher erläutert. Darin zeigt:
- Fig. 1: einen Querschnitt durch eine erste Ausführungsform eines Brandschutzglases, welches durch Befüllen eines Rohlings mit einer Brandschutzmaterialmasse und anschließender Polymerisation bzw. Gelbildung herstellbar ist;
- Fig. 2: eine stark schematisierte Darstellung, teils im Schnitt, eines mit der Brandschutzmaterialmasse zu befüllenden Rohlings;
- Fig. 3: eine schematische Darstellung eines in einer Befülleinheit durchzuführenden Befüllvorgangs zum Befüllen des Rohlings von Fig. 2 mit der Brandschutzmaterialmasse; und
- Fig. 4: eine schematische Darstellung des oberen Bereichs des Rohlings mit einer Entlüftungsöffnung, an der eine Entlüftungseinrichtung gemäß einer Ausführungsform der Erfindung angeschlossen ist, während des Befüllvorgangs von Fig. 3.

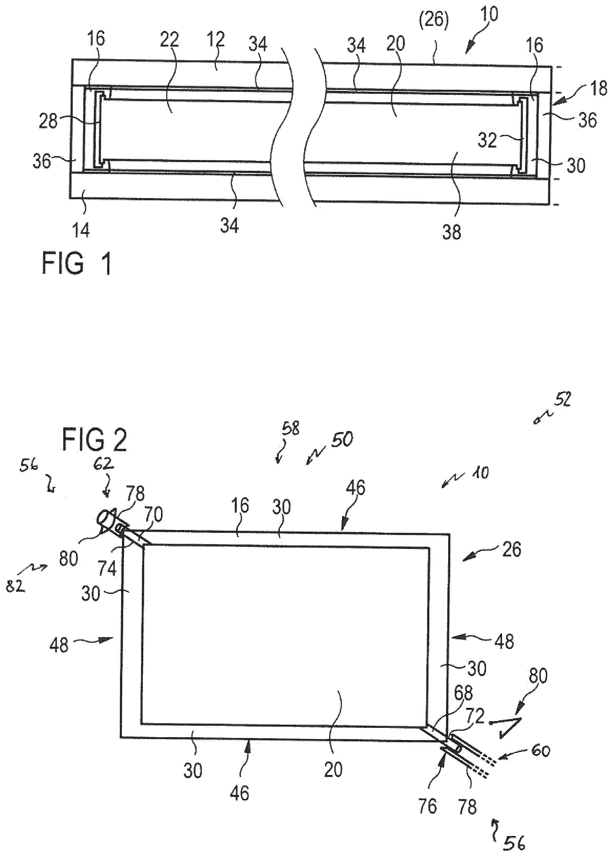

In Fig. 1 ist eine beispielhafte Ausführungsform eines Brandschutzglases 10 im Schnitt dargestellt.

Das Brandschutzglas 10 weist eine erste Scheibe 12, eine daran mit Abstand befestigte zweite Scheibe 14, Abstandshalter 16, eine umlaufende Abdichtung 18 zum Abdichten des Zwischenraums 20 zwischen den Scheiben 12 und 14 und ein Brandschutzmaterial 22 auf, das den Zwischenraum 20 vollständig ausfüllt.

Das Brandschutzglas ist z.B. vom Grundaufbau her so aufgebaut, wie dies in der DE 35 30 968 A1 beschrieben und gezeigt ist. Auch als Brandschutzmaterial 22 kann ein Brandschutzmaterial der aus der DE 35 30 968 A1 bekannten Art eingesetzt sein. Auch vergleichbare Brandschutzmaterialien sind möglich.

Zur Herstellung wird, wie dies in der DE 35 30 968 A1 beschrieben ist, zunächst ein Rohling vorgefertigt, in dem die erste Scheibe 12 und die zweite Scheibe 14 mittels der Abstandshalter 16 verbunden werden. Der so gebildete Zwischenraum 20 wird mittels der Abdichtung 18 bis auf eine später noch erläuterte Befüllöffnung und eine Entlüftungsöffnung an zwei diametral gegenüberliegenden Eckbereichen frei gelassen.

Die Herstellung der Befüll- und Entlüftungsöffnung kann ebenso geschehen, wie in der DE 35 30 968 A1 erläutert. Durch eine Befüllöffnung wird anschließend eine flüssige Ausgangsmaterialmasse - im Folgenden Brandschutzmaterialmasse 24 genannt - eingefüllt, welches dazu ausgebildet ist, durch Polymerisation und Gelbildung nach Einfüllen in den Zwischenraum 20 das Brandschutzmaterial 22 zu bilden. Auch dies ist in der DE 35 30 968 A1 im Einzelnen beschrieben.

Der Rohling wird im Folgenden mit dem Bezugszeichen 26 bezeichnet. Darunter wird im Folgenden die Einheit aus der ersten und zweiten Scheibe 14 mit Abstandshalter 16 und Abdichtung 18 verstanden, woraus dann durch Befüllen des Zwischenraums 20 und anschließender Polymerisation bzw. Gelbildung das Brandschutzglas 10 herzustellen ist.

Die Fig. 1 zeigt einen Schnitt an einem seitlichen Kantenbereich des Brandschutzglases 10.

Die Scheiben 12, 14 sind beispielsweise als Einscheibensicherheitsglas-Scheibe (ESG-Scheibe) mit einer Dicke von 4 bis 10 mm, insbesondere 6 mm, ausgebildet. Als Abstandshalter 16 ist ein C-Profil aus entsprechend geeignetem Material, wie z.B. Metall oder Leichmetall oder geeigneten Kunststoffen oder Keramiken, ausgebildet. Es sind insgesamt vier C-Profile 28 vorgesehen, welche die vier Rahmenholme 30 eines Abstandshalter-Rahmens ausbilden. Die vier Rahmenholme 30 sind an den Ecken über Eckverbinder 32 miteinander verbunden, im Wesentlichen wie dies in der DE 35 30 968 A1 beschrieben und gezeigt ist.

Die Übergangsbereiche zwischen den C-Profilen und den Scheiben 12, 14 sind mittels je einer Butylschnur 34 abgedichtet. Die Butylschnüre 34 bilden somit einen ersten Teil der Abdichtung 18. Rahmenseitig umlaufend ist ein zweiter Teil der Abdichtung 18 durch eine Thiokol/Polysulfat-Masse 36 zum Abdichten vorgesehen.

Das Brandschutzmaterial 22 ist vorzugsweise eine Brandschutzflüssigkeit in Form eines Hydrogels 38, welches die Eigenschaft besitzt, unter erhöhter Temperatur milchig zu werden und zu kühlen.

Eine Vorrichtung 52 und ein Verfahren zur Serienherstellung der Brandschutzgläser 10 sind genauer in der deutschen Patentanmeldung DE 10 2014 114 241 beschrieben, auf die für weitere Einzelheiten ausdrücklich Bezug genommen wird. Mit einer derartigen Vorrichtung 52 sind die Brandschutzgläser 10 möglichst linear, mit wenig Personal und Verlusten, herstellbar sind. Die Brandschutzgläser 10 werden nicht chargenweise produziert, sondern kontinuierlich auf einer oder mehreren Fertigungslinien.

An jeder Fertigungslinie gibt es eine Rohling-Anlieferungseinheit zum Bereitstellen der Rohlinge 26. Anschließend ist eine Befüllstation 50 mit einer Befülleinheit 58 vorgesehen, die in der Fig. 2 schematisch dargestellt ist. Die Befülleinheit 58 ist ein Ausführungsbeispiel für eine Brandschutzglasfüllvorrichtung 56.

Wie dies genauer in der DE 10 2014 114 241 beschrieben ist und deswegen hier nicht weiter erläutert ist, weist die Herstellvorrichtung nach der Befülleinheit 58, wo der Rohling 26 befüllt wird, eine Kippeinheit auf, wo der Rohling 26 horizontal ausgerichtet wird. Weiter ist eine Transporteinheit vorgesehen, mittels der die Rohlinge 26 transportiert werden können. Insbesondere ist ein Ruhelager vorgesehen, in welches die befüllten Rohlinge 26 abgelegt werden können, um die Polymerisationszeit innerhalb des Ruhelagers abzuwarten. Nach einer vorgegebenen Ruhezeit wird der jeweilige Rohling 26 durch die Transporteinheit wieder ausgelagert und dann der Weiterverarbeitung zugeführt.

Bei einer Ausgestaltung gibt es somit eine oder mehrere Fertigungslinien, die zur Fertigung der Brandschutzgläser 10 in einer Linie ausgebildet sind. Innerhalb der Fertigungslinie gibt es eine Anlieferung des Brandschutzglas-Rohlings 26 mit den Scheiben 12, 14. Nach der Anlieferung erfolgt eine Befüllung in einer Befülleinheit 58. Anschließend wird der Rohling 26 weitertransportiert, in die Horizontale gelegt und dann an einen Ruheort verfahren. Von diesem Ruheort aus wird nach der durchgeführten Polymerisation die Herstellung des Brandschutzglases 10 durch vollständige Abdichtung des Zwischenraums 20 fertiggestellt und dann zur Weiterverarbeitung transportiert.

Der Rohling 26 kann an der gleichen Produktionsstätte, wo die Fertigungslinie steht, vorgefertigt werden. Es ist aber auch möglich, den Rohling 26 an irgendeinem anderen Ort herzustellen und dann zu der Fertigungslinie zu transportieren. Ein an der Rohling-Anlieferungseinheit bereitgestellter Rohling kann die in Fig. 2 schematisch dargestellte Form haben. Hier ist stark schematisiert eine Schnittdarstellung durch den Abstandshalter 16 mit den Rahmenholmen 30 wiedergegeben, wobei zwei diametral gegenüberliegende Eckverbinder 32 Öffnungen aufweisen, von denen eine Öffnung als Befüllöffnung 68 und die andere Öffnung als Entlüftungsöffnung 70 dient.

Die Brandschutzglasfüllvorrichtung 56 weist einen Füllanschluss 60 zum Anschließen an die Befüllöffnung 68 auf, um so den Rohling 26 mit der flüssigen Brandschutzmaterialmasse 24 zu befüllen. Weiter weist die Brandschutzglasfüllvorrichtung 56 wenigstens eine Entlüftungseinrichtung 62 auf, die an die Entlüftungsöffnung 70 angeschlossen wird. Bei dem hier dargestellten Ausführungsbeispiel wird pro zu befüllendem Rohling 26 eine Entlüftungseinrichtung 62 eines Satzes von Entlüftungseinrichtungen 26 auf, die als Wegwerfartikel (oder auch insbesondere durch Reinigung usw. recyclebar) vorgesehen sind.

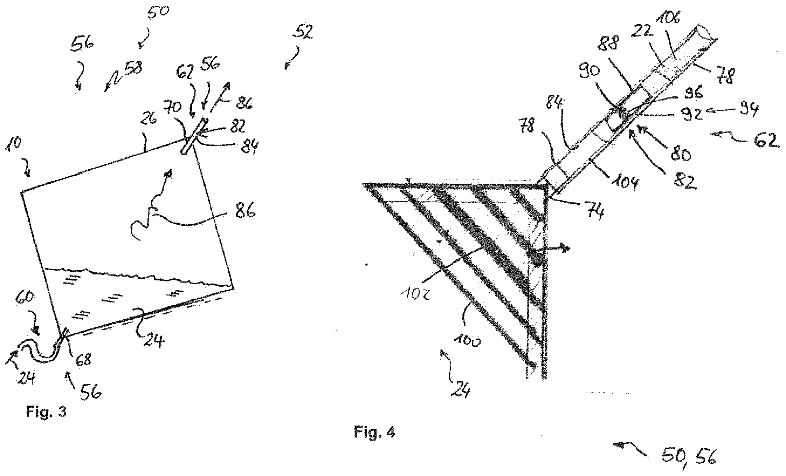

Bei dem in Fig. 2 und 3 dargestellten Ausführungsbeispeil weist der Füllanschluss eine Befülltülle 72 auf, der in die Befüllöffnung 68 eingeführt wird. Die Entlüftungseinrichtung 26 weist eine Entlüftungstülle 74 auf, die in die Entlüftungsöffnung 70 eingeführt wird. Die Tüllen 72, 74 weisen jeweils ein Einführrohr 76 auf, welches in entsprechende Öffnungen in den Eckverbindern 32 einführbar ist. Weiter können die Tüllen 72, 74 einstückig mit dem Einführrohr 76 oder - wie hier dargestellt aufgesetzt - einen flexiblen Schlauch 78 aufweisen. Der Schlauch 78 ist aus kostengünstigen Materialien wie insbesondere aus Silikon oder sonstigen synthetischen Polymeren hergestellt. Der Schlauch 78 ist durchsichtig oder zumindest soweit lichtdurchlässig, dass eine Farbveränderung im Inneren des Schlauches 78 von außen sichtbar ist. Weiter ist eine Verschließeinrichtung 80 vorgesehen, um die Öffnungen zu verschließen.

Eine bevorzugte Ausgestaltung der Entlüftungseinrichtung 62 weist somit ein Einführrohr 76, einen darauf aufgesetzten flexiblen Schlauch 78 und eine Verschlusseinrichtung 80 auf. Die Verschlusseinrichtung 80 ist bei der besonders bevorzugten Ausgestaltung, die im Folgenden anhand der Fig. 4 erläutert wird, als Automatikventil 82 ausgebildet.

In Fig. 4 ist der obere Bereich des zu füllenden Rohlings 26 des Brandschutzglases 10 zusammen mit der Entlüftungsöffnung 70 und der Entlüftungseinrichtung 62 beim in Fig. 3 dargestellten Befüllvorgang, in dem der Rohling 26 mittels der Brandschutzglasfüllvorrichtung 56 mit der Brandschutzmaterialmasse 24 befüllt wird dargestellt.

Die Entlüftungseinrichtung 62 weist die Entlüftungstülle 74, den Schlauch 78, ausgebildet als Silkonschlauch, und das Automatikventil 82 als Verschließeirichtung 80 auf.

Der Schlauch 78 bildet im Inneren einen Entlüftungskanal 84, durch den während des in Fig. 3 dargestellten Befüllvorgangs die noch in dem Zwischenraum 20 vorhandene Luft 86 entweicht.

Das Automatikventil 82 weist gemäß Fig. 4 ein Kunststoffröhrchen 88 oder eine Hülse auf. Das Kunststoffröhrchen oder die Hülse hat eine innenliegende Membran 90. Im Inneren der Membran 90 befindet sich ein Quellmittel 92.

Das Quellmittel 92 weist ein superabsorbierendes Polymer 94 auf, wie es ansonsten z.B. in Hygieneartikeln zum Aufsaugen von Flüssigkeit Verwendung findet.

Weiter ist im Inneren der Membran 90 ein Indikatormittel 96, insbesondere ein Indikatorpulver, vorgesehen, das bei Kontakt mit der Brandschutzmaterialmasse seine Farbe ändert oder einfärbend wirkt.

Die Membran 90 ist für die flüssige Brandschutzmaterialmasse 24 zumindest teilweise derart durchlässig, dass die Brandschutzmaterialmasse 24 bei Kontakt mit der Membran 90 zum Aufquellen bringt und somit den Entlüftungskanal 84 verschließt. Außerdem führt ein Kontakt zum Verfärben der Brandschutzmaterialmasse 24 aufgrund des Indikatormittels 96. Das Kunststoffröhrchen 88 ist - wie der Schlauch 78 - zumindest soweit durchsichtig oder lichtdurchlässig, dass diese Farbveränderung von außen sichtbar ist.

Im Folgenden wird Herstellung und insbesondere die Befüllung der Brandschutzgläser 10 näher erläutert.

Wie dies näher in der DE 10 2014 114 241 erläutert und daher hier nicht weiter gezeigt ist, wird der Rohling 26 angeliefert und an eine Lagerplatte der Befüll- und Kippeinheit angelegt. Die Lagerplatte ist vorzugsweise leicht schräg. Gegen die Lagerplatte wird dann eine Gegenlagerplatte gefahren und mit einer hier nicht näher dargestellten Spanneinrichtung oder Befestigungseinrichtung mit der Lagerplatte verspannt. Die beiden Platten wirken als Druckplatten, um ein Ausbeulen der Scheiben 12, 14 während des Befüllvorgangs zu vermeiden. Vorzugsweise in diesem Zustand werden die Tüllen 72, 74 in die entsprechenden Öffnungen in dem Rohling 26 eingeführt. Die durch die Platten und den entsprechenden Spannmechanismus gebildete Spanneinheit wird zusammen mit dem Rohling 26 in der Befüll- und Kippeinheit gekippt, so dass die untere Seite nicht mehr waagerecht, sondern leicht geneigt ist. Beispielsweise erfolgt eine Neigung um 10 Grad gegenüber der Horizontalen. Dies erfolgt so, dass die Befüllöffnung 68 den tiefsten Punkt des Rohlings 26 darstellt. Anschließend wird der Rohling 26 von unten her mit den Ausgangskomponenten des Brandschutzmaterials 22, wie z.B. der Brandschutzmaterialmasse 24, befüllt, wie dies in Fig. 3 dargestellt ist.

In Fig. 4 sind mit unterschiedlichen Linien ein 95%-iger Füllstand 100, ein 98%-iger Füllstand 102 sowie ein 100%-iger Füllstand 104 gezeigt. Bei 100%igem Füllstand tritt die flüssige Brandschutzmaterialmasse 24 über die Entlüftungstülle 74 hinaus in den Schaluch 78 und in den Entlüftungskanal 84 ein.

Erfolgt eine Füllung über 100% Füllstand, dann erreicht die flüssige Brandschutzmaterialmasse 24 das Automatikventil 82 und tritt durch die Membran 90 hindurch zu dem Quellmittel 92 und dem Indikatormittel 96. Das superabsorbierende Polymer 94 quillt auf und verschließt mit der Membran 90 den Entlüftungskanal 84 innerhalb von Sekunden. Das Indikatormittel 96 zeigt dies durch Verfärbung an. Somit erkennt ein Mitarbeiter, der den Befüllvorgang überwacht (oder eine automatische Steuerung mittels einer optischen Erfassung des Indikatormittels), dass der Befüllvorgang abgeschlossen ist.

Ist der Befüllvorgang abgeschlossen, werden die Öffnungen mittels der Verschlusseinrichtung 80 verschlossen. Wie erläutert, erfolgt dies zumindest bei der Entlüftungsöffnung 70 automatisch mittels des Automatikventils 82.
Wie in Fig. 4 bei dem Bezugszeichen 106 dargestellt, polymersiert dabei über das Automatikventil 80 hinaus im Entlüftungskanal 84 befindliche Brandschutzmaterialmasse 24 und wird fest bzw. gelartig, so dass der Schlauch 78 gut verschlossen ist.

Die Spanneinheit mit dem darin eingespannten Rohling 26 wird wieder zurück in die waagerechte Lage verfahren und anschließend um eine Längsachse gekippt, so dass der Rohling 26 in der horizontalen Richtung ausgerichtet ist, wie dies in Fig. 6d dargestellt ist. Anschließend wird der befüllte Rohling 26 in das Ruhelager eingelagert. Dort polymerisiert die Brandschutzmaterialmasse 24 aus und bildet das Brandschutzmaterial 22 des Brandschutzglases 10.

Nach dem Auspolymerisieren werden die Tüllen 72, 74 entfernt, wobei die gesamte Entlüftungseinrichtung 62 entfernt wird. Der Schlauch 78 und das Automatikventil 82 sind aus sehr kostengünstigen Materialien gefertigt und können nach Gebrauch entsorgt und insbesondere einem Recyclingprozess zugeführt werden.

### Bezugszeichenliste:

- 10: Brandschutzglas
- 12: erste Scheibe
- 14: zweite Scheibe
- 16: Abstandshalter
- 18: Abdichtung
- 20: Zwischenraum
- 22: Brandschutzmaterial
- 24: Brandschutzmaterialmasse
- 26: Rohling
- 28: C-Profil
- 30: Rahmenholme
- 32: Eckverbinder
- 34: Butylschnur
- 36: Thiokol/ Polysulfat-Masse
- 38: Hydrogel
- 50: Befüllstation
- 52: Vorrichtung
- 56: Brandschutzglasfüllvorrichtung
- 58: Befülleinheit
- 60: Füllanschluss
- 62: Entlüftungseinrichtung
- 68: Befüllöffnung
- 70: Entlüftungsöffnung
- 72: Befülltülle
- 74: Entlüftungstülle
- 76: Einführrohr
- 78: flexibler Schlauch
- 80: Verschließeinrichtung
- 82: Automatikventil
- 84: Entlüftungskanal
- 86: Luft
- 88: Kunststoffröhrchen (Hülse)
- 90: Membran
- 92: Quellmittel
- 94: superabsorbierendes Polymer
- 96: Indikatormittel
- 100: 95 % Füllstand
- 102: 98% Füllstand
- 104: 100% Füllstand (flüssig)
- 106: polymerisierte Flüssigkeit (fest bzw. Gel)

## Patentansprüche

1. Brandschutzglasfüllvorrichtung (56) zum Befüllen von Brandschutzgläsern (10) mit einem fließfähigen Brandschutzmaterial (24), umfassend:
einen Füllanschluss (60) zum Einfüllen des Brandschutzmaterials (24) an einer unteren Befüllöffnung (68) eines Brandschutzglases (10) und
wenigstens eine Entlüftungseinrichtung (62) zum Anschließen an einer oberen Entlüftungsöffnung (70) des Brandschutzglases (10), **dadurch gekennzeichnet, dass** die Entlüftungseinrichtung (62) einen Entlüftungskanal (84) und ein im Bereich des Entlüftungskanals (84) angeordnetes Quellmittel (92) aufweist, das bei Kontakt mit der Brandschutzmaterialmasse (24) aufquillt, um den Entlüftungskanal (84) zu verschließen.

2. Brandschutzglasfüllvorrichtung (56) nach Anspruch 1,
**dadurch gekennzeichnet,**
**dass** ein Satz von Entlüftungseinrichtungen (62) als Wegwerfartikel vorgesehen ist.

3. Brandschutzglasfüllvorrichtung (56) nach einem der voranstehenden Ansprüche,
**dadurch gekennzeichnet,**
**dass** die Entlüftungseinrichtung (62) einen Schlauch (78) aus einem synthetischen Polymer aufweist, in dessen Inneren das Quellmittel angebracht ist.

4. Brandschutzglasfüllvorrichtung (56) nach einem der voranstehenden Ansprüche, **dadurch gekennzeichnet,**
**dass** die Entlüftungseinrichtung (62) ein Indikatormittel (96) aufweist, das bei Kontakt mit der Brandschutzmaterialmasse (24) sein Aussehen und/oder das Aussehen der Brandschutzmaterialmasse (24) ändert und dasss die Entlüftungseinrichtung (62) zumindest teilweise derart durchsichtig oder lichtdurchlässig ausgebildet ist, dass die Veränderung des Aussehens von außen erfassbar ist.

5. Brandschutzglasfüllvorrichtung (56) nach Anspruch 4,
**dadurch gekennzeichnet,**
**dass** das Indikatormittel (96) dem Quellmittel (92) zugefügt ist.

6. Brandschutzglasfüllvorrichtung (56) nach einem der voranstehenden Ansprüche, **dadurch gekennzeichnet,**
**dass** das Quellmittel (92) ein suberabsorbierendes Polymer (94) enthält.

7. Brandschutzglasfüllvorrichtung (56) nach einem der voranstehenden Ansprüche, **dadurch gekennzeichnet,**
**dass** das Brandschutzmaterial (24) eine Brandschutzmaterialzusammensetzung zum Ausbilden eines Brandschutzgels durch Auspolymerisation innerhalb des Brandschutzglases (10) ist.

8. Brandschutzglasfüllvorrichtung (56) nach einem der voranstehenden Ansprüche, **dadurch gekennzeichnet,**
**dass** die Entlüftungseinrichtung (62) ein Kunststoffröhrchen (88) mit innenliegender Membran (90) aufweist, die zumindest teilweise für die Brandschutzmaterialmasse (24) durchlässig ist, wobei im Inneren der Membran (90) das Quellmittel (92) angeordnet ist.

9. Entlüftungseinrichtung (62) zur Verwendung in einer Brandschutzglasfüllvorrichtung (56) nach einem der voranstehenden Ansprüche, umfassend: einen Entlüftungskanal (84) in einem Schlauch (78) und/oder einer Röhre (88) aus einem Polymermaterial zum Anschließen an eine Entlüftungsöffnung (70) eines mit flüssiger Brandschutzmaterialmasse (24) zu befüllenden Brandschutzglases (10) und ein im Bereich des Entlüftungskanals (84) angeordnetes Quellmittel (92), das bei Kontakt mit flüssiger Brandschutzmaterialmasse aufquillt, um den Entlüftungskanal (84) in dem Schlauch (78) und/oder der Röhre (88) zu verschließen.

10. Entlüftungseinrichtung (62) nach Anspruch 9,
**dadurch gekennzeichnet,**
**dass** die Röhre ein Kunststoffröhrchen (88) mit innenliegender, zumindest teilweise für die Brandschutzmaterialmasse durchlässiger Membran (90) ist, in deren Inneren das Quellmittel (92) vorgesehen ist.

11. Entlüfungseinrichtung (62) nach Anspruch 9 oder 10,
**dadurch gekennzeichnet,**
**dass** ein Indikatormittel (96) vorgesehen ist, das bei Kontakt mit der Brandschutzmaterialmasse (24) sein Aussehen oder das Aussehen der Brandschutzmaterialmasse (24) ändert und dasss der Schlauch (78) und/oder die Röhre (88) zumindest teilweise derart durchsichtig oder lichtdurchlässig ausgebildet ist, dass die Veränderung des Aussehens von außen erfassbar ist.

12. Entlüftungseinrichtung (62) nach einem der Ansprüche 9 bis 11,
**dadurch gekennzeichnet,**
**dass** das Quellmittel (92) ein superabsorbierendes Polymer (94) aufweist.

13. Verfahren zum Befüllen eines Brandschutzglases (10) mit flüssiger Brandschutzmaterialmasse (24) umfassend:
a) Vorsehen einer Entlüftungseinrichtung (62) für das zu befüllende Brandschutzglas (10), wobei die Entlüftungseinrichtung (62) einen Entlüftungskanal (84) und ein im Bereich des Entlüftungskanals (84) angeordnetes Quellmittel (92) aufweist, wobei das Quellmittel (92) derart ausgebildet und angeordnet ist, dass es bei Kontakt mit der Brandschutzmaterialmasse aufquillt, um den Entlüftungskanal (84) zu verschließen;
b) Anschließen der Entlüftungseinrichtung (62) an eine oben angeordnete Entlüftungsöffnung (70) des Brandschutzglases (10) und Anschließen eines Füllanschlusses (60) an eine unten angeordnete Befüllöffnung (68) des Brandschutzglases (10);
c) Einfüllen der Brandschutzmaterialmasse (24) durch den Füllanschluss unter Entlüftung durch die Entlüftungseinrichtung (62), bis die Brandschutzmaterialmasse (24) das Quellmittel (92) in der Entlüftungseinrichtung (62) erreicht; und
d) automatisches Verschließen der Entlüftungseinrichtung (62) mittels Aufquellen des Quellmittels (92).

14. Verfahren nach Anspruch 13, **gekennzeichnet durch**
e) Polymerisieren der Brandschutzmaterialmasse (24) zum Bilden eines Brandschutzmaterials (22) in dem Brandschutzglas (10) bei angeschlossener und verschlossener Entlüftungseinrichtung (62) und
f) Entfernen der Entlüftungseinrichtung (62) nach Schritt e).

15. Verfahren nach Anspruch 14, **gekennzeichnet durch**
9) Entsorgen der Entlüftungseinrichtung (62) nach Schritt f).

## Claims

1. Fire safety glass filling device (56) for filling fire safety glasses (10) with flowable fireproof material (24), comprising:
a fill port (60) for filling the fireproof material (24) at a lower filling opening (68) of a fireproof glass (10) and
at least one ventilation device (62) for connection to an upper ventilation opening (70) of the fireproof glass (10), **characterized in that** the ventilation device (62) comprises a ventilation passage (84) and a swelling agent (92) arranged in the region of said ventilation passage (84) which swells upon contact with the fireproof material mass (24) to seal the ventilation passage (84).

2. Fire safety glass filling device (56) according to claim 1,
**characterized in that** a set of ventilation devices (62) is provided as a disposable item.

3. Fire safety glass filling device (56) according to one of the preceding claims, **characterized in that** the ventilation device (62) comprises a hose (78) made from a synthetic polymer in the interior of which the swelling agent is arranged.

4. Fire safety glass filling device (56) according to one of the preceding claims, **characterized in that** the ventilation device (62) includes an indicator means (96) that changes its appearance and/or the appearance of the fireproof material mass (24) upon contact with the fireproof material mass (24), and that the ventilation device (62) is at least partially transparent or translucent such that the change of the appearance is discernable from outside.

5. Fire safety glass filling device (56) according to claim 4, **characterized in that** the indicator means (96) is added to the swelling agent (92).

6. Fire safety glass filling device (56) according to one of the preceding claims, **characterized in that** the swelling agent (92) contains a superabsorbent polymer (94).

7. Fire safety glass filling device (56) according to one of the preceding claims, **characterized in that** the fireproof material (24) is a fireproof material composition for forming a fireproof gel by polymerization within the fire safety glass (10).

8. Fire safety glass filling device (56) according to one of the preceding claims, **characterized in that** the ventilation device (62) comprises a plastic tube (88) with an internal membrane (90), which is at least partially permeable to said fireproof material mass (24), wherein the swelling agent (92) is arranged in the interior of said membrane (90).

9. Ventilation device (62) for use in a fire safety glass filling device (56) according to one of the preceding claims, comprising:
a ventilation passage (84) within a hose (78) and/or tube (88) made from a polymer material for connecting to a ventilation opening (70) of a fire safety glass (10) to be filled with a liquid fireproof material mass (24), and a swelling agent (92) arranged in the region of the ventilation passage (84) which swells upon contact with liquid fireproof material mass to seal the ventilation passage (84) inside the hose (78) and/or the tube (88).

10. Ventilation device (62) according to claim 9, **characterized in that** said tube is a plastic tube (88) with an internal membrane (90), which is at least partially permeable to said fireproof material mass and in the interior of which said swelling agent (92) is provided.

11. Ventilation device (62) according to claim 9 or 10, **characterized in that** an indicator means (96) is provided which changes its appearance or the appearance of the fireproof material mass (24), and that the hose (78) and/or the tube (88) are at least partially transparent or translucent such that the change of the appearance is discernable from outside.

12. Ventilation device (62) according to claim 9 to 11, **characterized in that** the swelling agent (92) comprises a superabsorbent polymer (94).

13. Method for filling a fire safety glass (10) with a liquid fireproof material mass (24), comprising:
a) providing a ventilation device (62) for the fire safety glass (10) to be filled, wherein the ventilation device (62) comprises a ventilation passage (84) and a swelling agent (92) arranged in the region of the ventilation passage (84), wherein the swelling agent (92) is formed and disposed in such a manner that it swells upon contact with the fireproof material mass (24) to seal the ventilation passage (84);
b) connecting the ventilation device (62) to a ventilation opening (70) of the fire safety glass (10) located at the top and connecting a fill port (60) to a filling opening (68) of the fire safety glass (10) located at the bottom;
c) filling the fireproof material mass (24) through the fill port under ventilation by the ventilation device (62) until the fireproof material mass (24) reaches the swelling agent (92) inside the ventilation device (62); and
d) automatically sealing the ventilation device (62) by the swelling of the swelling agent (92).

14. Method according to claim 13, **characterized by**
e) polymerizing the fireproof material mass (24) for forming a fire safety material (22) inside the fire safety glass (10) with the ventilation device (62) in the connected and sealed condition and
f) removing the ventilation device (62) after step e).

15. Method according to claim 14, **characterized by**
g) discarding the ventilation device (62) after step f).

## Revendications

1. Dispositif de remplissage de vitres anti-incendie (56) destiné à remplir des vitres anti-incendie (10) avec un matériau coupe-feu coulante (24), comprenant:
un raccord de remplissage (60) pour remplir le matériau coupe-feu (24) sur une ouverture de remplissage inférieure (68) d'une vitre anti-incendie (10) et au moins un dispositif de ventilation (62) pour connexion à une ouverture de ventilation supérieure (70) de la vitre anti-incendie (10),
**caractérisé en ce que** l'ouverture de ventilation (62) comporte un conduit de ventilation (84) et un agent de gonflement (92) qui est disposé dans la zone du conduit de ventilation (84) et qui gonfle lors du contact avec la masse de matériau coupe-feu (24) pour obturer le conduit de ventilation (84).

2. Dispositif de remplissage de vitres anti-incendie (56) selon la revendication 1, **caractérisé en ce qu'**un jeu de dispositifs de ventilation (62) est prévu en tant qu'article jetable.

3. Dispositif de remplissage de vitres anti-incendie (56) selon l'une des revendications précédentes, **caractérisé en ce que** le dispositif de ventilation (62) comporte un tuyau (78) en un polymère synthétique à l'intérieur duquel est prévu l'agent de gonflement.

4. Dispositif de remplissage de vitres anti-incendie (56) selon l'une des revendications précédentes, **caractérisé en ce que** le dispositif de ventilation (62) comporte un moyen indicateur (96) qui change son apparence et/ou l'apparence de la masse de matériau coupe-feu (24), et que le dispositif de ventilation (62) est réalisé au moins partiellement de manière transparente ou translucide de telle sorte que le changement de l'apparence est discernable de l'extérieur.

5. Dispositif de remplissage de vitres anti-incendie (56) selon la revendication 4, **caractérisé en ce que** le moyen indicateur (96) est ajouté à l'agent de gonflement (92).

6. Dispositif de remplissage de vitres anti-incendie (56) selon l'une des revendications précédentes, **caractérisé en ce que** l'agent de gonflement (92) comprend un polymère superabsorbant (94).

7. Dispositif de remplissage de vitres anti-incendie (56) selon l'une des revendications précédentes, **caractérisé en ce que** le matériau coupe-feu (24) est une composition de matériaux coupe-feu pour former un gel antifeu par une polymérisation dans la vitre anti-incendie (10).

8. Dispositif de remplissage de vitres anti-incendie (56) selon l'une des revendications précédentes, **caractérisé en ce que** le dispositif de ventilation (62) comporte un petit tube en matière plastique (88) avec une membrane (90) placée à l'intérieure qui est au moins partiellement perméable à la masse de matériau coupe-feu (24), l'agent de gonflement (92) étant disposé à l'intérieur de ladite membrane (90).

9. Dispositif de ventilation (62) pour utilisation dans un dispositif de remplissage de vitres anti-incendie (56) selon l'une des revendications précédentes, comprenant:
un conduit de ventilation (84) dans un tuyau (78) et/ou un tube (88) en un matériau polymère pour la connexion à une ouverture de ventilation (70) d'une vitre anti-incendie (10) à remplir avec la masse de matériau coupe-feu liquide (24) et
un agent de gonflement (92) qui est disposé dans la zone du conduit de ventilation (84) et qui gonfle lors du contact avec la masse de matériau coupe-feu liquide (24) pour obturer le conduit de ventilation (84) dans le tuyau (78) et/ou dans le tube (88).

10. Dispositif de ventilation (62) selon la revendication 9,
**caractérisé en ce que** le tube est un petit tube en matière plastique (88) avec une membrane (90) placée à l'intérieure qui est au moins partiellement perméable à la masse de matériau coupe-feu, l'agent de gonflement (92) étant disposé à l'intérieur de ladite membrane.

11. Dispositif de ventilation (62) selon la revendication 9 ou 10,
**caractérisé en ce qu'**un moyen indicateur (96) est prévu qui change son apparence et/ou l'apparence de la masse de matériau coupe-feu (24) lors du contact avec la masse de matériau coupe-feu (24) et/ou que le tuyau (78) et/ou le tube (88) sont réalisés au moins partiellement de manière transparente ou translucide de telle sorte que le changement de l'apparence est discernable de l'extérieur.

12. Dispositif de ventilation (62) selon l'une des revendications 9 à 11,
**caractérisé en ce que** l'agent de gonflement (92) comporte un polymère superabsorbant (94).

13. Procédé de remplissage d'une vitre anti-incendie (10) avec une masse de matériau coupe-feu coulante (24), comprenant:
a) prévoir une ouverture de ventilation (62) pour la vitre anti-incendie (10) à remplir, ledit dispositif de ventilation (62) comportant un conduit de ventilation (84) et un agent de gonflement (92) disposé dans la zone du conduit de ventilation (84), ledit agent de gonflement (92) étant réalisé et disposé de telle sorte que celui-ci gonfle lors du contact avec la masse de matériau coupe-feu pour obturer le conduit de ventilation (84);
b) connecter le dispositif de ventilation (62) à une ouverture de ventilation (70) de la vitre anti-incendie (10) disposée en haut et connecter un raccord de remplissage (60) à une ouverture de remplissage (68) de la vitre anti-incendie (10) disposée en bas;
c) remplir la masse de matériau coupe-feu (24) par ladite connexion de remplissage sous ventilation par le dispositif de ventilation (62) jusque la masse de matériau coupe-feu (24) atteint l'agent de gonflement (92) dans le dispositif de ventilation (62); et
d) automatiquement fermer le dispositif de ventilation (62) par gonflement de l'agent de gonflement (92).

14. Procédé selon la revendication 13, **caractérisé par**
e) la polymérisation de la masse de matériau coupe-feu (24) pour former un matériau anti-incendie (22) dans la verre anti-incendie (10) à l'état connecté et fermé du dispositif de ventilation (62) et
f) l'enlèvement du dispositif de ventilation (62) après l'étape e).

15. Procédé selon la revendication 14, **caractérisé par**
g) l'élimination du dispositif de ventilation (62) après l'étape f).
